# EUROPEAN PATENT APPLICATION

(11) **EP 4 756 576 A1**
(43) Date of publication of application: **10.06.2026**
(21) Application number: 23947586.6
(22) Date of filing: 01.08.2023
(51) Int. Cl.: G06F 3/01

(54) **CONTROLLER DEVICE**

(71) Applicant: Sony Interactive Entertainment Inc., Tokyo 108-0075 (JP)
(72) Inventor: LIU, Yuhu, Tokyo 108-0075 (JP); NISHIDATE, Masaomi, Tokyo 108-0075 (JP); ISHIKAWA, Yuri, Tokyo 108-0075 (JP); NAKAGAWA, Yusuke, Tokyo 108-0075 (JP); WAKABAYASHI, Makoto, Tokyo 108-0075 (JP); MORI, Hideki, Tokyo 108-0075 (JP)
(74) Representative: Fish & Richardson P.C.
(86) International application number: PCT/JP2023/028112
(87) International publication number: WO 2025/027789

(57) **Abstract**

Provided is a controller device including a support body 10 that includes a grip section 11 held by a user, and a kinesthetic sense presentation section 30 that is coupled to the support body 10 via a joint and presents a kinesthetic sense to the user through use of a movable weight relatively movable with respect to a position to which this joint is coupled.

## Description

### [Technical Field]

The present invention relates to a controller device operated by a user.

### [Background Art]

In recent years, controller devices capable of presenting a kinesthetic sense to a user have widely been used.

### [Summary]

### [Technical Problem]

However, when a various types of presentation of the kinesthetic sense are given to the user in order to provide rich use experience, costs of the devices increase.

The present invention has been made in view of the actual situation described above, and has one of the objects to provide a controller device which can achieve the various types of presentation of the kinesthetic sense at a relatively low cost.

### [Solution to Problem]

One aspect of the present invention to solve the problem described above is a controller device including a support body that includes a grip section held by a user, and a kinesthetic sense presentation section that is coupled to the support body via a joint and includes kinesthetic sense presentation means that presents a kinesthetic sense to the user through use of a movable weight relatively movable with respect to a position to which this joint is coupled.

Moreover, another aspect of the present invention is a controller device including a support body that includes a grip section held by a user, a center-of-gravity adjustment body that is coupled to the support body via a joint rotatable about a plurality of axes, and includes a weight that is able to be disposed at a point apart from a rotational axis of the joint by a predetermined distance, and a control circuit that controls the rotation of the joint.

### [Advantageous Effect of Invention]

According to the present invention, it is possible to achieve the presentation of the various types of kinesthetic sense at the relatively low cost.

### [Brief Description of Drawings]

[FIG. 1]

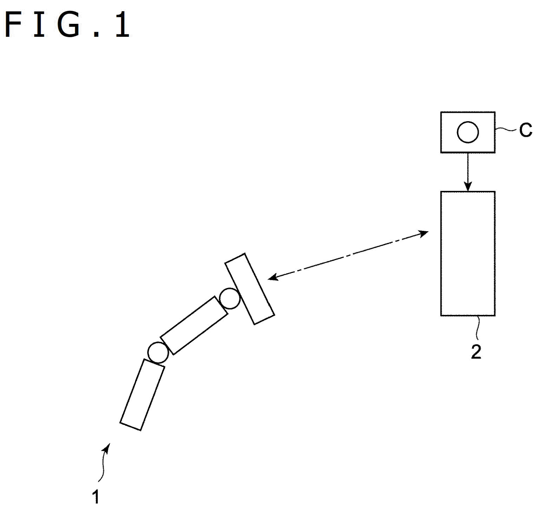

   FIG. 1 is a configuration block diagram for illustrating an example of a system including a controller device according to an embodiment of the present invention.
[FIG. 2]

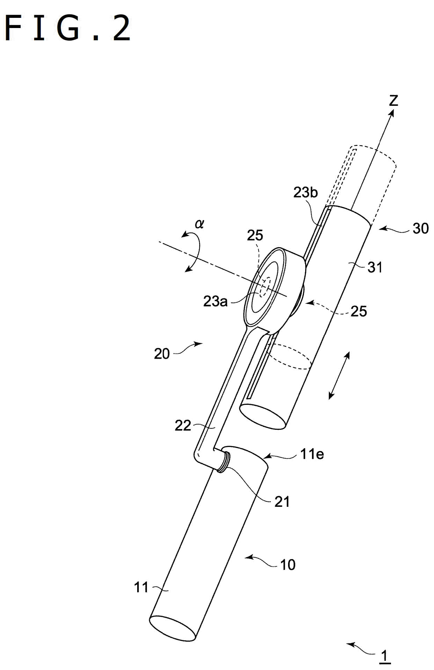

   FIG. 2 is a schematic configuration diagram for illustrating an example of the controller device according to the embodiment of the present invention.
[FIG. 3]

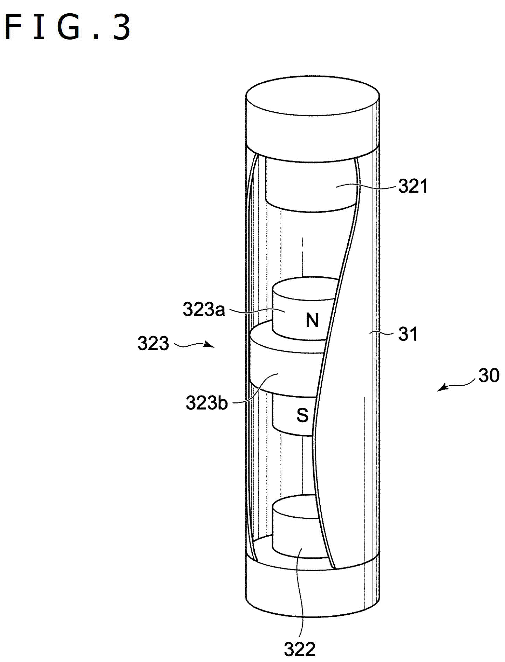

   FIG. 3 is a schematic explanatory diagram for illustrating a configuration example of a kinesthetic sense presentation section of the controller device according to the embodiment of the present invention.
[FIG. 4]

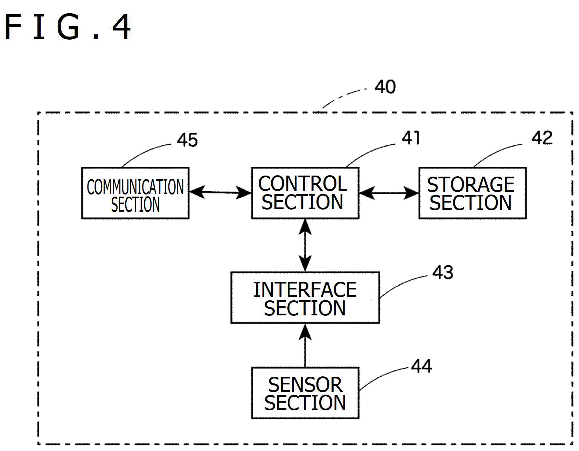

   FIG. 4 is a block diagram for illustrating a configuration example of a circuit section provided to the controller device according to the embodiment of the present invention.
[FIG. 5]

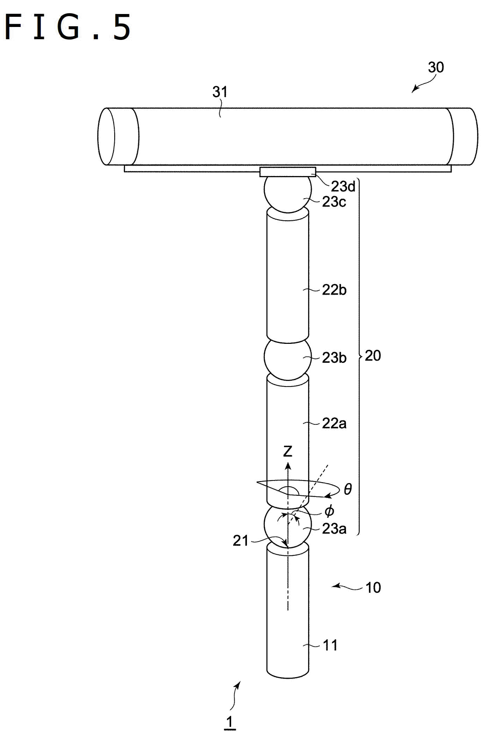

   FIG. 5 is a schematic configuration diagram for illustrating another example of the controller device according to the embodiment of the present invention.
[FIG. 6]

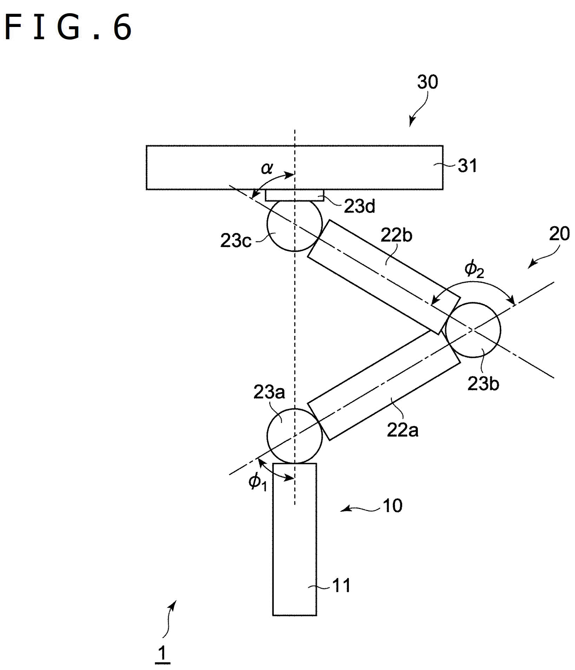

   FIG. 6 is an explanatory diagram for illustrating an operation example of the controller device according to the embodiment of the present invention.
[FIG. 7]

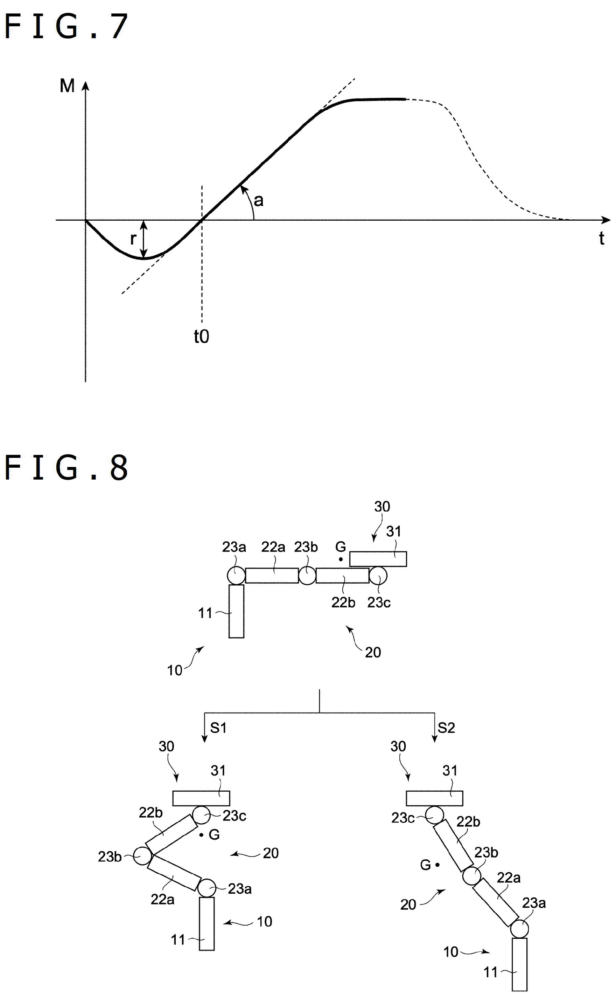

   FIG. 7 is an explanatory diagram for illustrating a content example of an instruction provided to the controller device according to the embodiment of the present invention.
[FIG. 8]
   FIG. 8 is an explanatory diagram for illustrating another operation example of the controller device according to the embodiment of the present invention.

### [Description of Embodiment]

A description is now given of an embodiment of the present invention with reference to the drawings. As exemplified in FIG. 1, a controller device 1 according to an example of the embodiment of the present invention is connected to an information processing device 2 such as a home game machine or a personal computer so as to be able to execute wired or wireless communication to and from the information processing device 2. Note that the following description and drawings are exemplifications, and sizes, ratios, and the like of each section may appropriately be changed.

### [Basic configuration]

One aspect of the controller device 1 includes a support body 10, a joint section 20, and a kinesthetic sense presentation section 30 as exemplified in FIG. 2. Moreover, the support body 10 includes a grip section 11.

Also, in the example of the present embodiment, the joint section 20 includes a base section 21, an extension section 22, and at least one joint element 23. Moreover, the joint section 20 may include, in correspondence to at least one of the joint elements 23, an actuator 25 which drives the joint elements 23 so as to change rotation angles and movement amounts thereof. However, in a case in which each joint element 23 of the joint section 20 is to be manually adjusted, the actuator 25 is not necessarily required.

In the following example, as the joint element 23, it is assumed that a rotational joint element 23a and a translational joint element 23bb are provided. However, this is an example, and there may be provided another joint element 23 in place of or in addition to them.

The extension section 22 of the joint section 20 is, for example, a columnar body, the base section 21 is disposed on one end side thereof, and the rotational joint element 23a is disposed at the other end. The rotational joint element 23a rotates in at least a predetermined angle range (α of FIG. 2) about a rotational axis being an axis in a direction orthogonal to an axis in a lengthwise direction of the extension section 22. On a side opposing the extension section 22 side of the rotational joint element 23a, the translational joint element 23b is disposed, thereby being able to move a relative position between the rotational joint element 23a and the kinesthetic sense presentation section 30 in a predetermined range (an arrow is illustrated in FIG. 2) on a rail (corresponding to a coupling section) disposed along an axis ("z" axis in FIG. 2) in a lengthwise direction of a body section 31 of the kinesthetic sense presentation section 30 described later. As the translational joint element 23b, it is possible to employ a widely-known mechanism such as a mechanism which uses the rail as a rack and a pinion which engages with the rail.

The grip section 11 of the support body 10 has a cylindrical shape. One end 11e side of the grip section 11 is fixed to the base section 21 of the joint section 20. Moreover, the kinesthetic sense presentation section 30 also has a cylindrical shape, and, in the case in which the translational joint element 23b of the joint section 20 is implemented as the mechanism which uses the rack and the pinion, it is only required to dispose the rack along the lengthwise direction on an outer circumference of the kinesthetic sense presentation section 30, and to engage the pinion with this rack. With this configuration, the translational joint element 23b of the joint section 20 is coupled to the kinesthetic sense presentation section 30 such that the kinesthetic sense presentation section 30 can axially be driven. In a certain example of the present embodiment, the kinesthetic sense presentation section 30 and the support body 10 are coupled to each other via the joint section 20 as described above.

In the present embodiment, by these rotational joint element 23a and translational joint element 23b, the position in the lengthwise direction and the position with respect to the rotational axis of the kinesthetic sense presentation section 30 can be changed, and a rotational angle thereof can also be changed.

For example, as exemplified in FIG. 3, the kinesthetic sense presentation section 30 includes the cylindrical body section 31 (corresponding to the kinesthetic sense presentation section body) and a kinesthetic sense presentation element 32 built into the body section 31. Moreover, the kinesthetic sense presentation element 32 includes electromagnets 321 and 322 respectively disposed at both ends of the body section 31 in the axial direction and a weight 323 disposed so as to be movable inside the cylindrical body section 31. The weight 323 includes a body 323a in a columnar shape and a slide section 323b wound around an outer circumference of this body. An outer circumference diameter of the slide section 323b is set to be slightly smaller than an inner circumference of the body section 31, thereby allowing the weight 323 to slide in the axial direction in the body section 31. Moreover, the body 323a has been magnetized such that one side in the lengthwise direction is the N pole and the other side is the S pole. The weight 323 corresponds to a movable weight in the present invention relatively movable with respect to a position to which a joint (corresponding to the joint section 20 in the present embodiment) is coupled.

In a certain example in the present embodiment, it is assumed that the weight of the weight 323 is set to be equivalent to the weight of the support body 10 or heavier than the weight of the support body 10 and is set to be heavier than the weight of the joint section 20. With this configuration, it is possible to vary a position of the center of gravity of the entire controller device 1 through the movement of the position of the kinesthetic sense presentation section 30 by the translational joint element 23b and the drive of the weight 323 of the kinesthetic sense presentation section 30. The kinesthetic sense presentation section 30 in this example corresponds to an example of a center-of-gravity adjustment body of the present invention.

Further, in the present embodiment, a circuit section 40 is disposed inside the controller device 1, for example, inside the grip section 11 of the support body 10. As exemplified in FIG. 4, the circuit section 40 includes a control section 41, a storage section 42, an interface section 43, a sensor section 44, and a communication section 45.

Here, the control section 41 is a program control device such as a central processing unit (CPU), and operates according to programs stored in the storage section 42. The control section 41 in the present embodiment receives information (referred to as operation information) indicating at least one of a posture of the grip section 11, a grip pressure by the user, and a movement direction and a movement speed (which can be acquired by a gyro sensor), for example, the grip section 11 and detected information such as the rotational angle and the position of each joint element 23 detected by the sensor section 44 described later, and transmits the information detected by the sensor section 44 to the information processing device 2 via the communication section 45.

Moreover, the control section 41 receives an instruction input from the information processing device 2, via the communication section 45, and controls the kinesthetic sense presentation section 30 according to this received instruction. An operation of the control section 41 is described later.

The storage section 42 is a memory device including a nonvolatile memory or the like, and holds the program executed by the control section 41. This program may be provided while stored in a computer-readable and non-transitory recording medium, and may then be stored in the storage section 42. Moreover, the storage section 42 operates also as a work memory for the control section 41.

The interface section 43 interposes between the control section 41 and peripheral devices such as the sensor section 44, and outputs information output from the peripheral devices such as the sensor section 44 to the control section 41. Moreover, the interface section 43 transmits an instruction output by the control section 41 to a peripheral device specified by the control section 41.

In an example of the present embodiment, the sensor section 44 includes an acceleration sensor which detects the posture of the grip section 11 and a strain sensor which detects the grip pressure of the grip section 11 by the user, and outputs the operation information detected thereby to the control section 41. In a certain example of the present embodiment, it is assumed that this acceleration sensor detects the gravity direction, detects a degree of inclination of the axis of the grip section 11 in the lengthwise direction with respect to the direction of the gravity (an example of the posture of the grip section 11), and outputs the degree of inclination to the control section 41.

Moreover, the sensor section 44 detects information relating to a displacement (such as the rotational angle or the movement amount) for each degree of freedom of each joint element 23, and outputs this detected information to the control section 41.

The communication section 45 is a wired interface such as the USB (Universal Serial Bus) interface or a wireless interface such as the Bluetooth (registered trademark), and transmits and receives information to and from the information processing device 2.

The controller device 1 in the present embodiment further includes a rechargeable power supply section or the like, and operates through electric power supplied to each section by the power supply section, a widely-known power supply can be employed as this power supply section, and hence, a detailed description thereof is herein omitted.

A description is now given of an example of a control operation of the kinesthetic sense presentation section 30 by the control section 41. In a certain example of the present embodiment, the information processing device 2 outputs an instruction for the kinesthetic sense to be presented by the controller device 1. As the example described before, in a case in which the kinesthetic sense presentation section 30 controls an up-and-down movement of the weight 323 through a voltage applied to the electromagnets 321 and 322, thereby presenting the kinesthetic sense, this instruction includes information specifying a temporal change in the voltage applied to the electromagnets 321 and 322 (such as a magnitude of the voltage (peak value), a waveform shape, a frequency, and a duty ratio).

The control section 41 follows this instruction to control the voltage applied to the electromagnets 321 and 322 of the kinesthetic sense presentation section 30. The control section 41 in the present embodiment uses the instructed peak value A and a frequency ω to set a voltage V to be applied to the electromagnets 321 and 322 as V = Asin (2πωt). At this time, the control section 41 applies such control that poles of the electromagnets 321 and 322 on the sides opposing to the weight 323 always have the same polarity. With this configuration, it is possible to achieve such kinesthetic sense presentation that the weight 323 is periodically moved up and down in the body section 31 of the kinesthetic sense presentation section 30 (this movement enables the change in center of gravity), the period is reduced to present vibration, and the weight 323 is moved toward one direction, thereby causing the weight 323 to collide with any one of the electromagnet 321 and the electromagnet 322 to present impact.

Moreover, the rotational joint element 23a and the translational joint element 23b may include lock mechanisms which fix the joints at a certain rotational angle and a certain position, respectively (such lock mechanisms are widely known, and hence a detailed description thereof is herein omitted).

In this example, the user fixes the rotational joint element 23a and the translational joint element 23b at a desired angle and at a desired position, respectively. As an example, when the rotational angle of the rotational joint element 23a is adjusted such that the lengthwise direction of the grip section 11 and the lengthwise direction of the kinesthetic sense presentation section 30 are parallel with each other (the grip section 11 and the kinesthetic sense presentation section 30 are disposed on a straight line), the user gains such a sense of center of gravity that the user holds a sword. Meanwhile, when there is provided such a setting that the lengthwise direction of the kinesthetic sense presentation section 30 is orthogonal to the lengthwise direction of the grip section 11, and the weight 323 moves in the body section 31 of the kinesthetic sense presentation section 30, the user receives such a kinesthetic sense that the user shots a gun.

Moreover, when the user adjusts the rotational angle of the rotational joint element 23a such that the lengthwise direction of the grip section 11 and the lengthwise direction of the kinesthetic sense presentation section 30 are parallel with each other, and then adjusts the position of the translational joint element 23b to make such setting that the movement range of the weight 323 is far from the grip section 11, the user receives the presentation of the kinesthetic sense while sensing the center of gravity at a farther position as a result of the movement of the weight 323 as in a case in which the user swings a long sword. Meanwhile, when the user adjusts the position of the translational joint element 23b to make such a setting that the movement range of the weight 323 is close to the grip section 11, the variation of the center of gravity due to the movement of the weight 323 is on a relatively closer side, and hence the user receives such presentation of the kinesthetic sense that the user is using a short sword.

As described above, according to the present embodiment, it is possible to achieve the presentation of the various kinesthetic senses at a relatively low cost.

### [Another example of joint]

In the description given above, the joint section 20 uses the rotational joint element 23a and the translational joint element 23b to change the angle formed between the grip section 11 and the kinesthetic sense presentation section 30 (the intersection angle between the axes in the lengthwise directions thereof at the time when the axes are virtually extended) and the distance between the grip section 11 and the kinesthetic sense presentation section 30, but the configuration of the joint section 20 is not limited to this example.

For example, the joint section 20 may include a gimbal, and the angle formed between the grip section 11 and the kinesthetic sense presentation section 30 may be changed about two axes (two axes being a first rotational axis of the extension section 22 in the lengthwise direction and a second rotational axis orthogonal to this first rotational axis), respectively. Moreover, in place of the gimbal, a spherical omnidirectional driving gear mechanism may be used to change the angle formed between the grip section 11 and the kinesthetic sense presentation section 30 about each of two or more axes including the first and second rotational axes described above (the omnidirectional driving gear mechanism is detailed in Tadakuma, Kenjiro et al., "Study on Mechanism of Spherical Omnidirectional Driving Gear with Two Degrees of Freedom," Journal of the Robotics Society of Japan, Volume 36, Issue 9, pp49-, 2018, and the like, and hence a detailed description is herein omitted).

### [Example of controlling joint]

Moreover, as already described, in the present embodiment, the rotational angle and the movement amount of the rotational joint element 23a and the translational joint element 23b of the joint section 20 or the rotational angle and the movement amount of the gimbal or the spherical omnidirectional driving gear mechanism in place of the rotational joint element 23a and the translational joint element 23b may be controlled by the actuators 25.

The actuators 25 of the joint section 20 in this example are controlled by, for example, the control section 41. Moreover, in this example, the information processing device 2 instructs the rotational angle of the rotational joint element 23a and the movement position of the translational joint element 23b.

The control section 41 drives the actuator 25 to rotate the rotational joint element 23a to the rotational angle instructed by the information processing device 2 about the rotational axis, and moves the position of the translational joint element 23b to the instructed position. After that, the control section 41 controls the actuators 25 such that these rotational angle and position are maintained.

Moreover, in place of the case in which the joint section 20 includes the rotational joint element 23a and the translational joint element 23b, also in the case in which the joint section 20 is the gimbal or the like, the control section 41 receives, according to the degrees of freedom, the instruction for the drive amount (the rotation amount or the movement amount) for each of the degrees of freedom of the joint section 20 from the information processing device 2, drives the actuators 25 of the joint section 20 according to this instruction, thereby controlling the rotational angle and the movement amount, and then drives actuators 25 such that these rotational angle and the movement amount are maintained.

### [Example having larger number of joints]

Further, as exemplified in FIG. 5, the joint section 20 may include a plurality of the extension sections 22 coupled to each other in a single row via the joint elements 23. In this example, the joint element 23 may be provided between the extension sections 22 next to each other as well as between the grip section 11 and the extension section 22 and between the extension section 22 and the kinesthetic sense presentation section 30.

In this example, the joint element 23 between the extension sections 22 next to each other or between the grip section 11 and the extension section 22 is only required to be the joint element 23 using, for example, the spherical omnidirectional driving gear mechanism, and may be a joint rotatable about the first rotational axis in the lengthwise direction of the extension section 22 and the second rotational axis orthogonal to this first rotational axis, respectively. Moreover, the joint element 23 disposed between the extension section 22 and the kinesthetic sense presentation section 30 may be a joint which similarly uses the spherical omnidirectional driving gear mechanism, and is rotatable about the respective axes being the first rotational axis in the lengthwise direction of the extension section 22 and the second rotational axis orthogonal to this first rotational axis, or may be the joint including the rotational joint element 23a and the translational joint element 23b as in the example already described.

Further, each joint element 23 in this example may be driven by the actuators 25 provided according to the degrees of freedom of the joint element 23, thereby being able to control the rotational angles, the movement positions, and the like. In this case, the information processing device 2 instructs the rotational angles and the movement amounts of each joint element 23, and the control section 41 controls the drive amount and the drive direction of the corresponding actuator 25 in accordance with the instruction received from the information processing device 2. This control may be executed by using the information detected by the sensor section 44 through the widely-known feedback control or the like.

### [Operation example]

The controller device 1 according to the present embodiment basically has the configuration described above, and operates as described below. In the following example, as exemplified in FIG. 5, in the controller device 1, the joint section 20 includes two columnar extension sections 22 being a first extension section 22a and a second extension section 22b, and the grip section 11 of the support body 10, the two extension sections 22, and the body section 31 of the kinesthetic sense presentation section 30 are coupled to each other in a single row via the joint elements 23.

That is, in this example,
- one end of the grip section 11 in the lengthwise direction and one end of the first extension section 22a in the lengthwise direction are coupled to each other via the joint element 23a,
- the other end of the first extension section 22a in the lengthwise direction and one end of the second extension section 22b in the lengthwise direction are coupled to each other via the joint element 23b, and
- the other end of the second extension section 22b in the lengthwise direction and the body section 31 of the kinesthetic sense presentation section 30 are coupled to each other via a joint element 23c and a joint element 23d.

Note that, in the following example, it is assumed that either one of the joint elements 23a and 23b is a joint rotatable about a first rotational axis in the lengthwise direction of the extension section 22 and a second rotational section orthogonal to the first rotational axis, respectively. Moreover, the axis of the corresponding extension section 22 in the lengthwise direction is a rotational axis, a rotational angle about this rotational axis is θ, and an angle (inclination angle) formed between the axial directions of the two members coupled to each other (for example, the lengthwise directions of the grip section 11 and the extension section 22) is φ.

Further, it is assumed that the joint element 23c is the rotational joint element and a joint element 23d is the translational joint element. The joint element 23c being the rotational joint element couples the other end of the second extension section 22b in the lengthwise direction and the joint element 23d rotatably about a predetermined axis (the axis of the second extension section 22b in the length direction). Moreover, the joint element 23d couples to this joint element 23c such that a position of a rotation center thereof is movable within a predetermined range (including a position at a center of the body section 31 in the lengthwise direction, and this position is considered as an origin ζ = 0) along the axis of the body section 31 in the lengthwise direction on a surface of the body section 31 of the kinesthetic sense presentation section 30. This coupling can be implemented by the mechanism using the rack and the pinion as in the example described before.

Initially, the control section 41 of the controller device 1 sets any one joint element 23 of the joint element 23a interposed between the grip section 11 and the first extension section 22a and the joint element 23b interposed between the first extension section 22a and the second extension section 22b such that θ = 0 and φ = 0.

Moreover, the control section 41 sets the rotation angle α of the joint element 23c interposed between the second extension section 22b and the body section 31 of the kinesthetic sense presentation section 30 to 0 (at this time, it is assumed that the lengthwise direction of the body section 31 is parallel with the direction at which θ = 0), and sets ζ to 0.

At this time, it is assumed that any of the lengthwise directions of the grip section 11 of the support body 10 and the two extension sections 22 are parallel with each other, the body section 31 of the kinesthetic sense presentation section 30 is in the direction orthogonal to the lengthwise direction of the grip section 11, and a center portion of the body section 31 is positioned on the extension of the grip section 11 in the lengthwise direction.

The control section 41 of the controller device 1 acquires, from the sensor section 44, the operation information relating to the posture of the grip section 11 and the rotation angles and the movement position of each joint element 23, and transmits this acquired information to the information processing device 2.

The information processing device 2 is executing an application program such as a game, acquires the operation information and the like from the controller device 1, and provides this acquired information to the processing of the application program.

For example, the information processing device 2 determines a movement direction and the like of a virtual object appearing in a game, for example, in a game for controlling a fighter plane, (in a virtual space of the game) the fighter plane on the basis of the posture, the movement direction, and the movement speed of the grip section 11. Moreover, the information processing device 2 determines a type and a direction of the kinesthetic sense to be presented to the user through the processing of the application program, and transmits, to the controller device 1, an instruction for presenting the kinesthetic sense of the determined type in the determined direction.

### [Presentation of inertia]

Specifically, it is assumed that, in a game for controlling a travel direction of a virtual object, the user is caused to grip the controller device 1 such that the lengthwise direction of the grip section 11 is directed forward and this direction is parallel with a floor surface and the user directs the controller device 1 to the left or the right, thereby controlling the travel direction of the virtual object.

In this game, the information processing device 2, as exemplified in FIG. 6, issues such an instruction that an inclination angle φ1 of the joint element 23a is 60°, an inclination angle φ of the joint element 23b is 120°, and also issues such an instruction that the rotation angle of the joint element 23c being the rotational joint element is 60°, and the position ζ of the joint element 23d is 0. With these instructions, the center of the body section 31 of the kinesthetic sense presentation section 30 is positioned on the axis of the grip section 11 in the lengthwise direction, and hence the shortest distance from an end of the grip section 11 on the kinesthetic sense presentation section 30 side to the weight 323 in the kinesthetic sense presentation section 30 is shorter than, for example, that in the case in which the inclination angles φ1 and φ2 of the joint elements 23a and 23b are 0 as exemplified in FIG. 5.

The information processing device 2 which executes the game application in the example described above instructs the user to grip the controller device 1 such that the lengthwise direction of the body section 31 of the kinesthetic sense presentation section 30 is parallel with the floor surface, and is parallel with the left-right direction of the user.

Subsequently, when the user moves the grip section 11 in the left-right direction, the sensor section 44 detects this movement, and the control section 41 transmits information indicating this movement to the information processing device 2. The information processing device 2 receives this information to control the travel direction of the virtual object, and instructs the controller device 1 to move the weight 323 of the kinesthetic sense presentation section 30 toward the opposite side of the movement indicated by this received information.

The control section 41 of the controller device 1 drives the weight 323 of the kinesthetic sense presentation section 30 in accordance with the instruction received from the information processing device 2. According to this example, in the information processing device 2, the weight 323 moves toward the opposite side with respect to the movement of the user, and hence the user receives such presentation of the kinesthetic sense that as if the inertia were acting on the operation (a force were applied toward the direction opposite to the operation direction).

Moreover, even for a similar presentation of the inertia, when the inclination angles φ1 and φ 2 of the joint elements 23a and 23b are 0 as exemplified in FIG. 5, the center of the body section 31 of the kinesthetic sense presentation section 30 is positioned on the axis of the grip section 11 in the lengthwise direction as in the example of FIG. 6, but the shortest distance from the end of the grip section 11 on the kinesthetic sense presentation section 30 side to the weight 323 in the kinesthetic sense presentation section 30 is long compared with the example of FIG. 6.

At this time, when the user grips the grip section 11 of the controller device 1 and moves the grip section 11 in the left-right direction as in the example described above, the sensor section 44 detects this movement, and the control section 41 transmits information indicating this movement to the information processing device 2. The information processing device 2 receives this information to control the travel direction of the virtual object, and instructs the controller device 1 to move the weight 323 of the kinesthetic sense presentation section 30 toward the opposite side with respect to the movement indicated by this received information. After that, the control section 41 of the controller device 1 drives the weight 323 of the kinesthetic sense presentation section 30 in accordance with the instruction received from the information processing device 2.

At this time, the user receives such presentation of the kinesthetic sense that as if the inertia described above were acting in a state in which the user holds a stick longer than that in the example of FIG. 6. It is considered to apply this example to a game in which a long stick is maintained at a stable position such as a balance game.

### [Another example relating to drive of kinesthetic sense presentation section]

Moreover, in the examples of FIG. 5 and FIG. 6, when the information processing device 2 uses the information relating to the posture and the information relating to the movement direction and the movement speed of the grip section 11 transmitted by the control section 41 of the controller device 1, to issue an instruction to, as exemplified in FIG. 7, present the kinesthetic sense opposite to the movement direction (M of FIG. 7) from a movement start to a time t0 and to then issue an instruction to move the weight 323 in the movement direction at a predetermined speed or a speed (indicated by a gradient "a") determined on the basis of the movement speed, thereby presenting the kinesthetic sense, the user gripping the controller device 1 receives such presentation of the kinesthetic sense that as if the controller device 1 were moving while the controller device 1 is warped (as if the motion were following with a delay).

FIG. 7 is an explanatory diagram for schematically indicating a control example as a time series of the movement amount of the weight 323 with respect to the movement direction of the controller device 1.

The information processing device 2 appropriately changes kinesthetic sense parameters such as a time t0 until the start of the following, a movement amount "r" of the weight 323 in the opposite direction (with respect to the movement direction of the controller device 1) until the following starts and the speed of the following (the gradient "a" of the movement amount), thereby being able to execute such kinesthetic sense presentation to the user that as if the user were holding a virtual object such as a whip, a fishing rod, a morningstar, a handbag, a lasso, or a chain.

For example, the controller device 1 sets, when the user selects a weapon in a game application, the kinesthetic sense parameters corresponding to this selected weapon, and instructs the controller device 1 to control the movement amount of the weight 323.

### [Time-series control of joint elements]

Further, in a certain example of the present embodiment, in the controller device 1 exemplified in FIG. 5 and FIG. 6, when the inclination angles φ1 and φ2 of the joint elements 23a and 23b are appropriately set, and the rotation angle α of the joint element 23c is controlled such that the controller device 1 forms an L shape having the grip section 11 as a short side, and the lengthwise direction of the body section 31 of the kinesthetic sense presentation section 30 is substantially parallel with the longer side of the L shape (in a direction substantially orthogonal to the lengthwise direction of the grip section 11), the user holding the grip section 11 receives such presentation of the kinesthetic sense that as if the user were holding a gun having a relatively long barrel.

When the user executes an operation for gun shooting in this state, in response to this operation, the information processing device 2 executes processing relating to the game, instructs, as exemplified in FIG. 8, the controller device 1 to change the inclination angle φ1 of the joint element 23a beyond 0 degrees, and instructs the controller device 1 to control the inclination angle φ2 of the joint element 23b and the rotation angle α of the joint element 23c to maintain the axis of the body section 31 of the kinesthetic sense presentation section 30 in the lengthwise direction so as not to vary from the initial state (S1). Further, the information processing device 2 issues, together with these instructions, such an instruction that the weight 323 in the body section 31 of the kinesthetic sense presentation section 30 collides with either one of the ends in the body section 31 to generate impact at a timing at which these variations end.

When the controller device 1 controls each section in accordance with the instructions in this example, the user holding this controller device 1 receives such a relatively strong kinesthetic sense that a knockback occurred by the gun shooting. Moreover, when the information processing device 2 instructs the controller device 1 to simply cause the weight 323 in the body section 31 of the kinesthetic sense presentation section 30 to collide with either one of the ends in the body section 31, thereby generating impact upon the operation for the gun shooting without changing the inclination angle and the rotation angle of each joint element 23, it is possible to present the user such a kinesthetic sense that a reaction of the gun shooting is received but the knockback has not occurred.

Further, when the information processing device 2 differentiates the instructions for the change amounts of the inclination angle and the rotation angle of the joint elements 23 and issues an instruction to move the kinesthetic sense presentation section 30 to a position as far from the grip section 11 as possible and generate the impact by the weight 323 (S2), the user gripping the controller device 1 which operates according to this instruction senses stronger knockback.

Note that the information processing device 2 may instruct a variation speed (change amount per unit time) of each of the inclination angle, the rotation angle, the movement amount, and the like of the joint element 23 at the time of these pieces of control. By increasing these change amounts per unit time (increasing the variation speeds), it is possible to achieve such kinesthetic sense presentation that the user holding the controller device 1 which follows this instruction senses stronger impact.

Moreover, in the examples described above, in FIG. 5 and FIG. 6, the position of the center of gravity of the controller device 1 exists on an extension of the grip section 11 in the lengthwise direction, this position is relatively far in FIG. 5, and this position is relatively near in FIG. 6. Further, in FIG. 8, each approximate center of gravity is a position indicated as a point G. As described above in the examples of the present embodiment, the position of the center of gravity can be changed, for example, according to the shape of the virtual object or the like, and further this position of the center of gravity can also be changed as a time series.

### [Recognition of shape, position, and posture by camera]

Moreover, in the examples described above, it is assumed that the information processing device 2 uses the information received from the controller device 1 to recognize the posture of the grip section 11 of the controller device 1, the displacements of each joint element 23, and further the shape of the controller device 1, but the present embodiment is not limited to these examples.

For example, the information processing device 2 may include a camera C, may use the camera C to capture the user and the controller device 1 gripped by this user, and may recognize, on the basis of a result of the capture, the posture of the grip section 11 of the controller device 1, the displacements of each joint element 23, further the shape of the controller device 1, and a relative position between the user and each section of the controller device 1. This processing of the recognition may be implemented by disposing a machine-recognizable marker to each section of the controller device 1, and recognizing the position and the like of this marker. Moreover, this processing for the recognition may be executed through use of a machine learning model obtained through machine learning of a relation between the image and the posture, the shape, and the like of the grip section 11 of the controller device 1.

Further, the camera C may be a camera capable of recognizing the depth (distance from the camera C), and, in this case, information relating to this depth may further be used to recognize the posture of the grip section 11 of the controller device 1, the displacements of each joint element 23, further the shape of the controller device 1, and the relative position between the user and each section of the controller device 1.

### [Expression without causing user to sense weight]

Further, the information processing device 2 may control the displacements of each of the joint elements 23 (displacement amounts corresponding to the degree of freedom of each joint element 23 such as the inclination angle, the rotation angle, the movement position, and the like) of the controller device 1 and the state of the kinesthetic sense presentation (the movement, the position, and the like of the weight 323) in the kinesthetic sense presentation section 30 such that the user senses the weight of the controller device 1 as less as possible.

Specifically, when the information processing device 2 intends to execute the control such that the user senses the weight of the controller device 1 as less as possible, the information processing device 2 causes the center of gravity of the controller device 1 to be as close to the position of the hand (grip section 11) of the user as possible as exemplified in FIG. 6.

As another example, in a case in which the information processing device 2 can use the image captured by the camera C or the like to recognize the position of the shoulder of the user and the position of each section of the controller device 1, the information processing device 2 may execute control of successively instructing the displacements of the joint elements 23 of the controller device 1 such that the center of gravity of the controller device 1 is close to a position on an axis of the hand or the shoulder of the user in the vertical direction (a direction parallel with the direction of the center of gravity) as possible. For example, in a case in which the center of gravity can be set to a predetermined distance range from the axis of the shoulder of the user in the vertical direction, the information processing device 2 executes control of successively instructing the displacements of the joint elements 23 of the controller device 1 such that the center of gravity of the controller device 1 is close to the axis of the shoulder in the vertical direction. In a case in which the center of gravity cannot be set to the predetermined distance range from the axis in the vertical direction of the shoulder of the user, the information processing device 2 executes control of successively instructing the displacements of the joint elements 23 of the controller device 1 such that the center of gravity of the controller device 1 is close to the axis of the hand of the user in the vertical direction.

The user who holds the controller device 1 which follows this instruction senses the weight in the direction close to the vertically downward direction of the position of, for example, the hand or the shoulder, this direction is fundamentally a direction toward which the weight of the arm or the hand is sensed, and hence there can be provided such expression that the weight of the controller device 1 itself is sensed as less as possible.

### [Priority between center of gravity and kinesthetic sense presentation]

The controller device 1 according to the present embodiment can control the position of the center of gravity and the direction of the presentation of the kinesthetic sense (the movement direction of the weight 323) as described above, but there exist, due to limits of the displacements of each joint element 23, a case in which when the position of the center of gravity is moved to a desired position, the direction of the presentation of the kinesthetic sense cannot be set to a desired direction and a case in which when the direction of the presentation of the kinesthetic sense is set to the desired direction, the position of the center of gravity cannot be set to the desired position.

In these cases, the information processing device 2:
(1) as a kinesthetic-sense-direction prioritized mode, may first match the axial direction of the body section 31 of the kinesthetic sense presentation section 30 with the desired direction, and may then control the displacements of each joint element 23 such that the position of the center of gravity is as close to the desired position as possible; or
(2) as a center-of-gravity prioritized mode, may first control the displacements of joint elements 23 such that the position of the center of gravity is at the desired position, and may then control the displacements of the joint element 23 between the joint section 20 and the kinesthetic sense presentation section 30 such that the axial direction of the body section 31 of the kinesthetic sense presentation section 30 is as close to the desired direction as possible.

Further, the information processing device 2,
(3) as an average mode, may control the displacements of each joint element 23 so as to minimize an average of a difference between the axial direction of the body section 31 of the kinesthetic sense presentation section 30 and the desired direction thereof and a difference between the position of the center of gravity and the desired position (the average may be a weighted average according to importance of each difference, a usual arithmetic average, or another statistical value).

The displacements of each of these joint element 23 may be obtained by analyzing, through inverse kinematics model, a relative relation between the direction of the kinesthetic sense intended to be virtually presented by the kinesthetic sense presentation section 30 and the position of the center of gravity changed through the displacements of the joint elements 23, and the posture (the lengthwise direction thereof) of the grip section 11. For the calculation of the displacements of the joint elements 23 through use of the inverse kinematics model, it is possible to employ a widely-known method.

### [Grip pressure of grip section]

Further, in the case in which the controller device 1 includes the sensor section 44 which detects a grip pressure (magnitude of a grip force of the user) of the grip section 11 and the control section 41 transmits information relating to this detected grip pressure, the information processing device 2 may use this information relating to the grip pressure to correct the instructions for the kinesthetic sense to be presented and the displacements of the joint elements 23.

### [Correction according to distance]

Moreover, the information processing device 2 may correct the instruction for the displacements of each joint element 23 according to a distance between the joint element 23 and the grip section 11 at the time of this instruction. For example, the information processing device 2 may make such a correction that the displacement speed (for example, a magnitude of a change in inclination angle per unit time) of the joint element 23 increases as the distance from the grip section 11 is longer. Moreover, conversely, the information processing device 2 may execute such control that the displacement speed (for example, the magnitude of the change in inclination angle per unit time) of the joint element 23 decreases as the distance from the grip section 11 is longer. The first correction is appropriate for presentation of such a kinesthetic sense that as if the user were operating a whip, and the second correction is appropriate for presentation of such a kinesthetic sense that as if the user were suspending the handbag.

### [Interaction with body of user and the like]

Further, in a certain example of the present embodiment, the information processing device 2 may displace the joint elements 23 of the controller device 1, thereby executing such an operation of bringing the controller device 1 into contact with a predetermined portion of the body of a user existing in a vicinity of the controller device 1 such as the user gripping the controller device 1.

In this example, the information processing device 2 detects, through use of the camera C or the like, each section of the controller device 1 and the portion (for example, the shoulder) of the body of the user gripping the controller device 1 with which the controller device 1 is intended to be brought into contact. After that, the information processing device 2 generates an instruction for controlling the displacements (the inclination angle, the rotation angle, the movement position, and the like) of each joint element 23 such that, for example, a distal end portion (such as an end portion of the body section 31 of the kinesthetic sense presentation section 30) of the controller device 1 comes in contact with the predetermined portion of the body of the user, and transmits the instruction to the controller device 1.

Further, the controller device 1 may include a distance sensor based on an infrared ray, an ultrasonic wave, or the like in the end portion (the distal end portion) of the body section 31 of the kinesthetic sense presentation section 30 or the like. In this example, the control section 41 of the controller device 1 may execute the control at a plurality of stages including moving, for example, the distal end portion of the controller device 1 to a position close the body of the user in accordance with the instruction of the information processing device 2, then reducing the displacement speeds while detecting the distance to the body of the user, thereby moving the distal end portion to a position closer to the body of the user, and bringing the distal end portion in contact with the body. This is for safety of the user.

Moreover, conversely to this example, the information processing device 2 may check, when the camera C or the like is used to detect positions of each sections of the controller device 1 and objects (the user and other obstacles) existing in the vicinity of the controller device 1, and the joint elements 23 of the controller device 1 are displaced to deform the controller device 1, whether or not each section of the controller device 1 collides with any of the objects (or approaches a position having a distance to any of the objects shorter than a predetermined distance), and may issue an instruction to stop the displacements of the joint elements 23 when the collision is determined to occur.

Similarly, in a case in which the controller device 1 includes the distance sensor using the infrared ray, the ultrasonic wave, or the like in the end portion (the distal end portion) of the body section 31 of the kinesthetic sense presentation section 30 or the like, the controller device 1 itself may displace the each joint element 23 while checking whether or not the controller device 1 collides with any of the objects (or approaches a position having a distance to any of the objects shorter than a predetermined distance), and may stop the displacements of the joint elements 23 when the controller device 1 determines that the collision occurs.

### [Kinesthetic sense presentation device in grip section]

Further, the controller device 1 may include a kinesthetic sense presentation device such as a vibrator in the grip section 11. In this example, the information processing device 2 outputs an instruction of controlling the kinesthetic sense presentation device in the grip section 11 at an appropriate timing, and the control section 41 of the controller device 1 drives the kinesthetic sense presentation device in the grip section 11 according to this instruction.

According to this example, it is possible to more clearly present such a kinesthetic sense as cutting with a chainsaw.

### [Other application examples of kinesthetic sense presentation]

In addition to the examples described above, for example, there can be conceivable such application examples as:
- umbrella: the center of gravity is quickly moved, and impact is then expressed through use of the kinesthetic sense presentation section 30;
- shovel: the center of gravity is moved toward the outside with respect to the grip section 11 as much as possible to express a state in which a heavy object is attached to the distal end side;
- slingshot with a rubber strip for shot: each joint element 23 is controlled such that the center of gravity slowly moves in a state in which the rubber strip is pulled, and each joint element 23 is controlled such that the position of the center of gravity moves at a relatively high speed toward a direction apart from the body of the user when an operation of releasing the rubber strip is executed;
- expression of a case in which a weight changes such as drinking a beverage and expression of liquid: the center of gravity is controlled according to the posture of the grip section 11 to express a state in which liquid is held or the displacements of the joint elements are controlled such that the position of the center of gravity gradually approaches a position close to the axis in the vertical direction from the hand or the shoulder of the user holding the controller device 1 when the posture of the grip section 11 (particularly an angle toward the distal end) exceeds a threshold value to make expression for reducing a sense of weight;
- turning a lever and opening a door: the detection result of the posture of the grip section 11 is used to drive the kinesthetic sense presentation section 30 when this detected posture satisfies a predetermined condition, thereby expressing impact caused by the operation of the lever; and
- cutting: the movement direction of the weight 323 is controlled to periodically be inverted (the period of this control for the inversion depends on a parameter of the magnitude of impact) in accordance with an instruction, and this control is stopped at the time when the cutting is considered to be completed.

### [Processing on controller device side]

Moreover, in the description given above, the control section 41 of the controller device 1 controls each section in accordance with the instruction by the information processing device 2, but the present embodiment is not limited to this example. For example, the control section 41 may control each section according to operations (an inclination operation of the grip section 11, a change in gripping force applied to the grip section 11, and the like) of the user without the instruction from the information processing device 2.

Moreover, in another example, the controller device 1 may correct, in response to settings of a parameter for the sense of weight, a parameter for length, and the like (these settings may directly be made by the user to the controller device 1, or may be instructed from the information processing device 2) the displacement amounts, the displacement speeds, and the like of the joint elements 23 set through the instruction received from the information processing device 2. In this example, the kinesthetic sense presentation and the control of the change in center of gravity are executed through cooperation between the information processing device 2 and the controller device 1.

For example, the controller device 1 may make such a correction that the inclination angle and the rotation angle (amplitudes as viewed from the user) of the joint element 23 farther from the grip section 11 are larger as the parameter of the sense of weight is larger.

### [Movable direction of weight]

Moreover, it is assumed that the weight 323 is movable along the axis of the body section 31 of the kinesthetic sense presentation section 30 in the lengthwise direction in the description given above, but the present embodiment is not limited to this example. For example, the weight 323 may be movable in the circumferential direction of the body section 31 in the cylindrical shape about the axis of the body section 31 of the kinesthetic sense presentation section 30 in the lengthwise direction as a rotational axis. Moreover, in a case in which the shape of the body section 31 is another shape such as a sphere, the weight 323 may be movable in any direction inside the body section 31.

### [Effects of embodiment]

With the controller device 1 according to the present embodiment, a predetermined posture of the grip section 11 may be considered as a reference posture, and a temporal change (such as the movement amount) of the position of the center of gravity may also be controlled according to a difference of the actual posture of the grip section 11 from this reference posture, and, moreover, the posture of the virtual object managed by the information processing device 2 is controlled according to the information relating to the posture (such as the posture of the grip section) of the controller device 1, and the position of the center of gravity, the vibration amount, the impact amount, and the like of the controller device 1 are controlled according to the posture of this virtual object, thereby being able to present the various types of kinesthetic sense presentation to the user.

### [Reference Signs List]

1: Controller device
2: Information processing device
10: Support body
11: Grip section
20: Joint section
21: Base section
22: Extension section
23: Joint element
25: Actuator
30: Kinesthetic sense presentation section
31: Body section
32: Kinesthetic sense presentation element
40: Circuit section
41: Control section
42: Storage section
43: Interface section
44: Sensor section
45: Communication section
321, 322: Electromagnet
323: Weight

## Claims

1. A controller device comprising:
a support body that includes a grip section held by a user; and
a kinesthetic sense presentation section that is coupled to the support body via a joint and
includes kinesthetic sense presentation means that presents a kinesthetic sense to the user through use of a movable weight relatively movable with respect to a position to which this joint is coupled.

2. The controller device according to claim 1, wherein the kinesthetic sense presentation section includes a hollow body and a movable weight movable in the hollow body.

3. The controller device according to claim 1, wherein the kinesthetic sense presentation section includes a coupling section that is coupled to the joint, and a kinesthetic sense presentation section body that is disposed relatively movable with respect to the coupling section.

4. A controller device comprising:
a support body that includes a grip section held by a user;
a center-of-gravity adjustment body that is coupled to the support body via a joint rotatable about a plurality of axes, and includes a weight that is able to be disposed at a point apart from a rotational axis of the joint by a predetermined distance; and
a control circuit that controls rotation of the joint.

5. The controller device according to claim 4,
wherein the support body includes at least one element body interposed between the grip section and the center-of-gravity adjustment body, and
this element body is coupled to the element body adjacent thereto, the grip section, or the center-of-gravity adjustment body via the joint.

6. The controller device according to any one of claims 1 to 5, wherein the joint is a joint rotatable about at least one axis.
